# EUROPEAN PATENT APPLICATION

(11) **EP 4 836 107 A1**
(43) Date of publication of application: **04.11.2026**
(21) Application number: 24913520.3
(22) Date of filing: 23.12.2024
(51) Int. Cl.: H01M 50/131, H01M 50/121, H01M 50/119, H01M 50/126, H01M 50/105

(54) **POUCH FILM, AND POUCH EXTERIOR MATERIAL AND SECONDARY BATTERY COMPRISING SAME**

(30) Priority: 27.12.2023 KR 20230193081
(71) Applicant: Youlchon Chemical Co., Ltd., Seoul 07057 (KR)
(72) Inventor: PARK, Han Chul, Ansan-si, Gyeonggi-do 15430 (KR); SONG, Nok Jung, Seoul 07057 (KR); HAN, Hee Sik, Ansan-si, Gyeonggi-do 15430 (KR); JUNG, Jong Hyuk, Ansan-si, Gyeonggi-do 15430 (KR); SHIN, Sung Chul, Ansan-si, Gyeonggi-do 15430 (KR)
(74) Representative: Grünecker Patent- und Rechtsanwälte PartG mbB
(86) International application number: PCT/KR2024/020983
(87) International publication number: WO 2025/143727

(57) **Abstract**

The present disclosure includes an outer layer, a barrier layer, and a sealant layer that are laminated sequentially, wherein the sealant layer includes a polyolefin-based resin and a polyolefin-based elastomer, and the sealant layer may have an effect in which heat fusion between the sealant layers may be easily performed to implement a complete sealing shape by specifying an area ratio based on a melting temperature by differential scanning calorimetry (DSC) to find an optimal sealing temperature condition between a melting start temperature and a melting end temperature of the sealant layer, and adhesion, insulation, and bending properties may be improved therefrom.

## Description

### [Technical Field]

### CROSS-REFERENCE TO RELATED APPLICATION

This application claims the benefit of priority to Korean Patent Application No. 10-2023-0193081, filed in the Korean Intellectual Property Office on December 27, 2023, the entire contents of which are incorporated herein by reference.

### Technical Field

The present disclosure relates to a pouch film, a pouch exterior material including the same, and a secondary battery.

### [Background Art]

A secondary battery is capable of repeated charging and discharging, and may be classified into a cylindrical secondary battery, a prismatic secondary battery, a pouch type secondary battery, and the like according to a structure and a manufacturing method thereof. Among these, a pouch type secondary battery includes a battery body part (e.g., an electrode, a separator, and/or an electrolyte) and a pouch film that encloses the battery body part, and is widely used in energy storage devices, such as automobile batteries, because a structure thereof is relatively simple and a capacity per unit volume thereof is relatively large.

As a method of packaging a battery body part with a pouch film, a method is generally used in which sealant layers of the pouch film (e.g., sealant layers) are brought into contact with each other, and then heat and pressure are applied to the sealant layers in contact with each other to perform heat-sealing and form a sealing part, thereby sealing the battery body part. The battery body part sealed by the pouch film in this manner may not be substantially exposed to an external environment.

Meanwhile, to prevent the battery body part from being exposed to an external environment, the pouch film is required to have an excellent sealing property, and particularly, is required to have an excellent sealing property retention characteristic under various environmental conditions. This is because, when the battery body part is exposed to an external environment, problems may occur, such as degradation of a function of the pouch type secondary battery or explosion.

Here, a sealing property of the pouch film and a retention characteristic thereof may be evaluated by a sealing strength of the pouch film. Sealing strength is an indicator that indicates excellence of heat-sealing strength at a sealing part of a pouch film, and when the sealing strength of the pouch film is excellent, sealing performance of the pouch film may generally be regarded as being excellent.

Meanwhile, in the related art, it was difficult for a pouch film to secure sufficient heat-sealing strength at a sealing part, and studies for improving heat-sealing strength at the sealing part were also insufficient. Furthermore, in the related art, it was difficult to secure sufficient sealing strength of a pouch film, and a problem in which a heat-sealed sealing part was opened (vented) frequently occurred. In particular, at a portion of the sealing part to which heat and pressure are applied, a polyolefin-based resin, for example, a polypropylene resin, is melted to perform heat-sealing, and the polypropylene-based resin in a portion to which pressure is applied is pushed toward a peripheral portion to which pressure is not applied, so that a thickness is naturally increased and pressure and heat are not applied uniformly to the sealing part. Furthermore, when heat is transferred to the peripheral portion, fluidity occurs due to the transferred heat, but an incomplete sealing shape is formed because of insufficient thermal energy. Accordingly, to solve such problems, studies are being conducted to manufacture a pouch film in which a polypropylene resin of the sealing part has sufficient fluidity so that thermal fusion between contact surfaces may be facilitated, a complete sealing shape of the sealing part may be achieved, and insulation property, adhesion property, and a bending property may be improved therefrom.

### [Disclosure]

### [Technical Problem]

An aspect of the present disclosure provides a pouch film in which thermal fusion between sealant layers is facilitated to achieve a complete sealing shape and which has excellent adhesion property, insulation property, and a bending property derived therefrom.

An aspect of the present disclosure also provides a pouch exterior material including the pouch film.

An aspect of the present disclosure also provides a secondary battery including the pouch exterior material.

### [Technical Solution]

The present disclosure provides a pouch film, a pouch exterior material including the same, and a secondary battery.
(1) The present disclosure provides a pouch film including an outer layer, a barrier layer, and a sealant layer laminated sequentially, the sealant layer includes a polyolefin-based resin and a polyolefin-based elastomer, the sealant layer has a melting temperature (Tm) of 130 °C or higher and 160 °C or lower as measured by differential scanning calorimetry (DSC) at a heating rate of 10 °C/min, and the pouch film satisfies Condition 1 below
   [Condition 1]
   a ratio of an area below a reference point of 140 °C (Area A) to a sum of the area below the reference point of 140 °C (Area A) and an area above the reference point of 140 °C (Area B), i.e., Area A/(Area A + Area B), in a graph obtained by the differential scanning calorimetry, is 40% or more and less than 85%.
(2) In (1), the present disclosure provides a pouch film, wherein the polyolefin-based resin includes at least one material selected from the group consisting of homo-polypropylene (homo-PP), a random polypropylene copolymer (random-PP), and a block polypropylene copolymer (block-PP).
(3) In (1) or (2), the present disclosure provides a pouch film, wherein a content of the polyolefin-based elastomer is 10 wt% or more and 50 wt% or less based on a total resin of the sealant layer.
(4) In any one of (1) to (3), the present disclosure provides a pouch film, wherein the polyolefin-based elastomer includes at least one material selected from the group consisting of an ethylene-propylene copolymer (EPR)-based elastomer resin, an ethylene-butene copolymer (EBR)-based elastomer resin, an ethylene-hexene copolymer (EHR)-based elastomer resin, an ethylene-octene copolymer (EOR)-based elastomer resin, a propylene-butene copolymer (PBR)-based elastomer resin, a propylene-hexene copolymer (PHR)-based elastomer resin, a propylene-octene copolymer (POR)-based elastomer resin, an LLDPE-based elastomer resin, and a thermoplastic polyurethane (TPU) elastomer resin.
(5) In any one of (1) to (4), the present disclosure provides a pouch film, wherein the ratio of Area A/(Area A + Area B) in Condition 1 is 50% or more and 80% or less.
(6) In any one of (1) to (5), the present disclosure provides a pouch film, wherein the sealant layer has a melting temperature (Tm) of 130 °C or higher and 150 °C or lower as measured by differential scanning calorimetry at a heating rate of 10 °C/min.
(7) In any one of (1) to (6), the present disclosure provides a pouch film, wherein the outer layer includes at least one material selected from the group consisting of nylon and polyethylene terephthalate.
(8) In any one of (1) to (7), the present disclosure provides a pouch film, wherein the barrier layer includes at least one selected from the group consisting of aluminum, stainless steel, copper, titanium, and alloys thereof.
(9) In any one of (1) to (8), the present disclosure provides a pouch film, wherein when sealed at a temperature of 165 °C or higher and 185 °C or lower for 2 seconds or more and 4 seconds or less under a pressure of 0.1 MPa or higher and 0.3 MPa or lower to form a pouch exterior material, an insulation resistance according to a measuring method below is 50 GΩ or more.

### [Measuring method]

A pouch film specimen was molded into a size of 30 mm × 40 mm × 5 mm, 2 mL of an electrolyte was injected, and a lead tab was inserted to prepare a dummy cell through side sealing and tab sealing. Thereafter, the dummy cell was left for 24 hours, and a resistance was measured when a voltage of 1,000 V was applied.

(10) The present disclosure provides a pouch exterior material including the pouch film of any one of (1) to (9).

(11) In (10), a pouch exterior material, wherein the pouch exterior material is formed by sealing at a temperature of 165 °C or higher and 185 °C or lower for 2 seconds or more and 4 seconds or less under a pressure of 0.1 MPa or higher and 0.3 MPa or lower.

(12) The present disclosure provides a secondary battery including the pouch exterior material of (10) or (11).

### [Advantageous Effects]

According to the pouch film of the present disclosure, an optimal sealing temperature condition between a melting start temperature and a melting end temperature of a sealant layer is determined so that thermal fusion between sealant layers may be facilitated to achieve a complete sealing shape, and adhesion property, insulation property, and a bending property may be improved therefrom.

### [Description of Drawings]

FIG. 1 illustrates an example of a DSC graph for Condition 1 according to the present disclosure.
FIG. 2 illustrates a schematic diagram of a process from thermal fusion between the sealant layers to recrystallization.
FIG. 3 illustrates a complete sealing shape and an incomplete or irregular sealing shape.

### [Mode for Invention]

Hereinafter, the present disclosure will be described in more detail to help understanding of the present disclosure. Then, terms or words used in the specification and claims should not be interpreted as being limited to ordinary or dictionary meanings, and should be interpreted as meanings and concepts that are consistent with the technical idea of this present disclosure based on the principle that the inventor may properly define the concepts of the terms to explain his or her invention in the best way.

The terms used herein are for the purpose of describing exemplary embodiments only, and are not intended to limit the present disclosure. Singular forms include plural forms unless interpreted otherwise in context.

It will be further understood that the terms "comprises," "comprising," "includes," and/or "including," when used herein, specify the presence of stated features, numbers, steps, components, or combinations thereof, but do not preclude the presence or addition of one or more other features, numbers, steps, components, or combinations thereof.

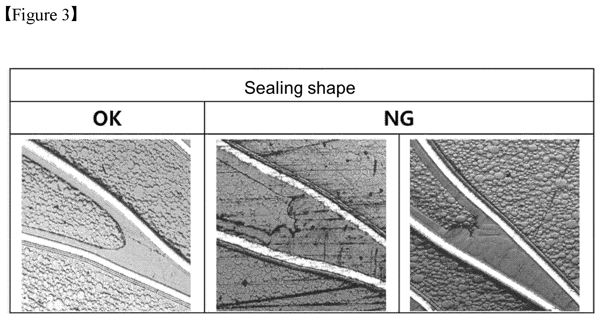

In the specification, a "complete sealing shape" refers to a case in which, referring to FIG. 3, during a thermal fusion process between the sealant layers, a shape of a peripheral portion of a heat-sealed area formed by contact between the sealant layers is in the form of a smooth and gentle curve, and an "incomplete sealing shape" refers to a case in which a boundary line is visible between the sealant layers, or the shape of the peripheral portion of the heat-sealed area is not in the form of a smooth and gentle curve but includes an angular or pointed projection shape.

### Pouch Film

The present disclosure provides a pouch film including an outer layer, a barrier layer, and a sealant layer laminated sequentially, wherein the sealant layer includes a polyolefin-based resin and a polyolefin-based elastomer, wherein the sealant layer has a melting temperature (Tm) of 130 °C or higher and 160 °C or lower as measured by differential scanning calorimetry (DSC) at a heating rate of 10 °C/min, and wherein the pouch film satisfies Condition 1 below:

### [Condition 1]

A ratio of an area below a reference point of 140 °C (Area A) to a sum of the area below the reference point of 140 °C (Area A) and an area above the reference point of 140 °C (Area B), i.e., Area A/(Area A + Area B), in a graph obtained by the differential scanning calorimetry, is 40% or more and less than 85%.

The inventors of the present disclosure conducted studies to find an optimal sealing condition between a melting start temperature and a melting end temperature of the sealant layer, and found that properties, such as sealing performance, insulation property, and a bending property, are affected when a cross-section of a sealing part is analyzed according to a predetermined area ratio calculated by dividing a graph obtained by the differential scanning calorimetry into areas based on a predetermined reference point and according to a change in a sealing temperature. Accordingly, the present disclosure may provide a pouch film that has a complete sealing shape of a sealing part and exhibits excellent sealing performance, adhesion property, insulation property, and a bending property by specifying a melting temperature Tm at a DSC endothermic peak and an area ratio with respect to a reference point (temperature) in a graph obtained from DSC based on the optimal sealing condition.

The melting temperature Tm may be measured by differential scanning calorimetry (DSC). That is, a raw material used for the sealant layer is a polymer, and a melting temperature of the polymer may generally be measured by DSC. Differential scanning calorimetry (DSC) is a method for analyzing physical and chemical properties of a specimen from temperature and heat change data obtained from energy supplied to a sample and a reference furnace, in which a difference in energy input is measured as a function of temperature while temperatures of the sample and the reference are changed. Quantitative information may be obtained from a position, a shape, and a number of the peaks analyzed in this manner. When a temperature is increased at a constant rate, an endothermic peak appears at a specific temperature after a glass transition temperature Tg appears, and the corresponding temperature is referred to as a melting temperature Tm.

The sealant layer may be a sealant layer of the pouch film for a secondary battery exterior material. That is, the sealant layer may directly contact a battery body part (e.g., an electrode, a separator, and/or an electrolyte). To this end, the sealant layer includes a polyolefin-based resin as a matrix resin and a polyolefin-based elastomer as a domain resin.

Furthermore, the sealant layer may have a melting temperature (Tm) of 130 °C or higher and 160 °C or lower as measured by differential scanning calorimetry (DSC) at a heating rate of 10 °C/min, and By way of example, the melting temperature Tm may be 130 °C or higher, 131 °C or higher, 133 °C or higher, 135 °C or higher, 137 °C or higher, 139 °C or higher, 140 °C or higher, 160 °C or lower, 157 °C or lower, 155 °C or lower, 153 °C or lower, 151 °C or lower, or 150 °C or lower, and specifically, the melting temperature Tm may be 130 °C or higher and 150 °C or lower. Here, the melting temperature Tm may be adjusted according to a type or form of the polyolefin-based resin included in the sealant layer. At the same time, a ratio of an area below a reference point of 140 °C (Area A) to a sum of the area below the reference point of 140 °C (Area A) and an area above the reference point of 140 °C (Area B), i.e., Area A/(Area A + Area B), in a graph obtained by the differential scanning calorimetry, may be 40% or more and less than 85%. By way of example, the area ratio may be 40% or more, 45% or more, 50% or more, 55% or more, 60% or more, 65% or more, 70% or more, 75% or more, less than 85%, or 80% or less.

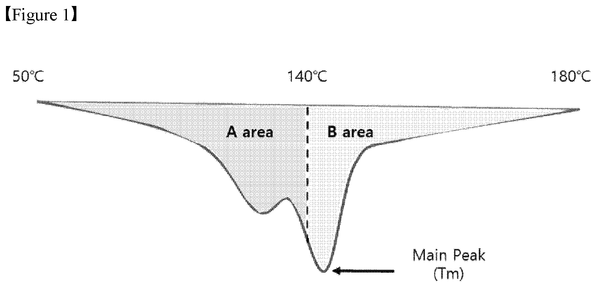

FIG. 1 illustrates an example of a DSC graph for Condition 1 according to the present disclosure. Referring to FIG. 1, in the DSC graph of the sealant layer, the graph may be divided into Zone A and Zone B based on 140 °C. Here, the reference point of 140 °C refers to a minimum temperature at which heat-sealing is possible during a process of heat-sealing the sealant layers to manufacture a pouch exterior material from the pouch film. Specifically, heat-sealing does not occur at a temperature below 140 °C, and heat-sealing occurs at a temperature of 140 °C or higher. Furthermore, the area ratio may be adjusted according to a type and a content of the polyolefin-based elastomer included in the sealant layer.

When the melting temperature Tm of the sealant layer falls within the above range and, at the same time, the ratio of Area A/(Area A + Area B) is high, specifically 40% or more, the sealant layer may have sufficient fluidity at a low sealing temperature, and thermal fusion between contact surfaces (between the sealant layers) may be facilitated. Because sufficient fluidity may be achieved, a sufficient mixing process may proceed, and recrystallization after the sufficient mixing process may begin. Accordingly, a complete sealing shape may be achieved, and thus excellent sealing performance, adhesion property, a bending property, and insulation property may be obtained.

On the other hand, when the melting temperature of the sealant layer falls outside the above range and, at the same time, the ratio of Area A/(Area A + Area B) is low, specifically less than 40%, fluidity of the sealant layer at a low temperature is insufficient, and a mixing process of the sealant layers for thermal fusion does not proceed smoothly. Accordingly, an incomplete sealing shape may be achieved, and sealing performance, adhesion property, a bending property, and insulation property may be deteriorated.

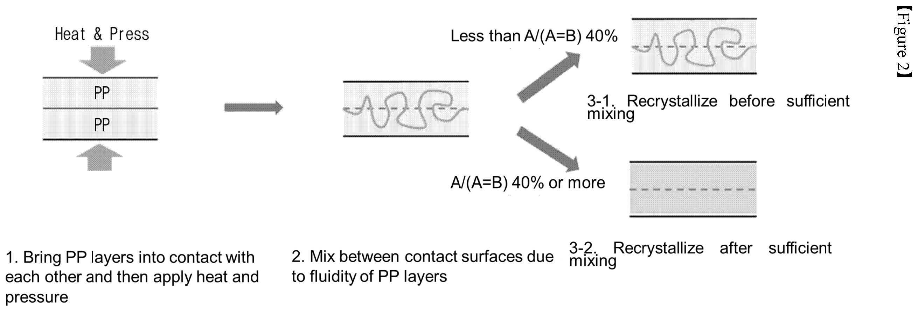

FIG. 2 illustrates a schematic diagram of a process from thermal fusion between the sealant layers to recrystallization during a sealing process. Referring to FIG. 2, a first image illustrates applying heat and pressure after the sealant layers (PP layers) are brought into contact with each other, and a second image illustrates a process in which fluidity of the sealant layers occurs and mixing between contact surfaces proceeds. Accordingly, when the melting temperature and Condition 1 are satisfied, sufficient mixing is achieved and recrystallization subsequently proceeds, so that excellent sealing performance, insulation property, and a bending property may be obtained. On the other hand, when the melting temperature and Condition 1 are not satisfied, fluidity of the sealant layers is weak, and recrystallization proceeds before sufficient mixing is achieved, so that an incomplete sealing shape appears and sealing performance, insulation property, and a bending property may be deteriorated.

Meanwhile, the pouch film may be used to seal a battery body part (e.g., an electrode, a separator, and/or an electrolyte). For example, the battery body part may be sealed by bringing sealant layers of two different pouch films into contact with each other and then heat-sealing the sealant layers to form a sealing part. As another example, the battery body part may be sealed by folding a single pouch film in half so that the sealant layers contact each other and then heat-sealing the sealant layers in contact with each other to form a sealing part.

The pouch film including the sealing part formed by heat-sealing of the sealant layer may exhibit excellent sealing performance derived from excellent sealing strength of the sealant layer. Accordingly, the sealant layer should have excellent electrolyte resistance and excellent insulation properties. To this end, the sealant layer may include at least a polyolefin-based resin.

According to an embodiment of the present disclosure, the polyolefin-based resin may include, for example, a polyolefin derived from an olefin or a derivative thereof, a copolymer thereof, or a blend that includes at least one thereof. For example, the polyolefin-based resin may include at least one selected from the group consisting of polyethylene, polypropylene, polybutylene, a copolymer derived from monomers derived from ethylene and/or propylene and monomers derived from an α-olefin, and a blend thereof.

Specifically, the polyolefin-based resin may include at least one material selected from the group consisting of homo-polypropylene (homo-PP), a random polypropylene copolymer (random-PP), and a block polypropylene copolymer (block-PP). The melting temperature according to the differential scanning calorimetry may be affected by a type of the polyolefin-based resin included in the sealant layer. More specifically, the polyolefin-based resin may be a random polypropylene copolymer (random-PP) or a block polypropylene copolymer (block-PP).

Furthermore, the sealant layer includes a polyolefin-based elastomer in addition to the polyolefin-based resin. The polyolefin-based elastomer modifies a surface of the sealant layer, and may change mechanical strength and chemical properties of the sealant layer. The polyolefin-based elastomer may serve as a domain resin in the sealant layer.

According to an embodiment of the present disclosure, the polyolefin-based elastomer may include at least one material selected from the group consisting of an ethylene-propylene copolymer (EPR)-based elastomer resin, an ethylene-butene copolymer (EBR)-based elastomer resin, an ethylene-hexene copolymer (EHR)-based elastomer resin, an ethylene-octene copolymer (EOR)-based elastomer resin, a propylene-butene copolymer (PBR)-based elastomer resin, a propylene-hexene copolymer (PHR)-based elastomer resin, a propylene-octene copolymer (POR)-based elastomer resin, an LLDPE-based elastomer resin, and a thermoplastic polyurethane (TPU) elastomer resin.

Furthermore, according to an embodiment of the present disclosure, a content of the polyolefin-based elastomer may be 10 wt% or more and 50 wt% or less based on a total resin of the sealant layer. By way of example, the content of the polyolefin-based elastomer may be 10 wt% or more, 15 wt% or more, 20 wt% or more, 25 wt% or more, 30 wt% or more, 35 wt% or more, 40 wt% or more, 50 wt% or less, or 45 wt% or less based on the total resin of the sealant layer. When the content of the polyolefin-based elastomer satisfies the above range, an area ratio in a graph obtained from DSC measurement may be adjusted, and a pouch film having a complete sealing shape and exhibiting excellent sealing performance, insulation property, and a bending property may be obtained therefrom.

According to an embodiment of the present disclosure, the sealant layer may be configured as a laminate of two or more layers in terms of diversifying functions. In a detailed example, the sealant layer may include a first sealant layer disposed on the barrier layer, and a second sealant layer disposed on the first sealant layer. Here, the first sealant layer may be a layer that assists adhesion between the barrier layer and the second sealant layer while further improving a function as a sealant layer, and the second sealant layer may be a layer that constitutes an innermost sealant layer of a pouch film laminate and performs sealing while preventing leakage of a secondary battery, particularly, leakage of a non-aqueous electrolyte. As described above, the first sealant layer may be an extrusion lamination coating (EC) layer (mainly an extruded polypropylene layer), and the second sealant layer may be a polypropylene (PP) layer resin disposed below the first sealant layer (inside with respect to the pouch film), and preferably may be an unstretched polypropylene (CPP) layer.

According to an embodiment of the present disclosure, a pouch film in which an average particle diameter of the domain resin in the second sealant layer is 50 nm or more and 125 nm or less is provided. As described above, the pouch film according to the present disclosure includes a matrix resin including a polyolefin-based resin and a domain resin including a polyolefin-based elastomer resin, and because a content of the domain resin satisfies the above-described numerical range and an average particle diameter of the domain resin satisfies the above-described numerical range, the pouch film may have a high chemical resistance property having excellent heat-sealing strength and insulation resistance characteristics, and may have a high-temperature stability.

According to an embodiment of the present disclosure, a pouch film, in which the matrix resin includes a polyolefin-based resin, is provided. Specifically, the matrix resin may be a polypropylene-based resin, and more specifically may be an unstretched polypropylene-based resin.

According to an embodiment of the present disclosure, a pouch film, in which the outer layer includes at least one material selected from the group consisting of nylon and polyethylene terephthalate, is provided.

The outer layer may be an outermost layer of the pouch film, and may include a heat-resistant resin layer having a melting point greater than a heat-seal temperature of the sealant layer. The heat-resistant resin layer may include any one selected from the group consisting of polyimide, polyester, polyolefin, copolymers thereof, and blends thereof. Here, the outer layer may have a single-layered structure or a multilayer structure including at least one of the above-described materials.

The outer layer may have an appropriate thickness within a range in which sufficient mechanical strength and sufficient formability as an exterior material may be ensured. For example, a thickness of the outer layer may be 15 µm or more, 20 µm or more, 25 µm or more, or 35 µm or more, and 140 µm or less, 110 µm or less, 100 µm or less, 90 µm or less, 80 µm or less, 70 µm or less, 50 µm or less, or 40 µm or less. When the above range is satisfied, a dielectric breakdown voltage may be maintained at a high level.

According to an embodiment of the present disclosure, a pouch film, in which the outer layer includes polyethylene terephthalate, is provided. Specifically, the outer layer may be formed of a laminated film of nylon and polyethylene terephthalate (PET), and in this case, formability is more advantageous as a thickness of the PET film decreases and a thickness of the nylon film increases. However, as a thickness of the PET film decreases, it may be disadvantageous in terms of a dielectric breakdown voltage. From this viewpoint, by way of example, a thickness of the nylon layer may be 10 µm or more, 12 µm or more, 15 µm or more, or 20 µm or more, and 40 µm or less, 35 µm or less, or 30 µm or less, and a thickness of the PET layer may be 5 µm or more, 8 µm or more, or 10 µm or more, and 30 µm or less, 25 µm or less, or 20 µm or less.

According to an embodiment of the present disclosure, a pouch film, in which the barrier layer includes at least one selected from the group consisting of aluminum, stainless steel, copper, titanium, and alloys thereof, is provided.

The barrier layer may be an intermediate layer of the pouch film (e.g., a layer that is disposed between the outer layer and the sealant layer), and may serve to block intrusion of gas and/or moisture. The barrier layer is not particularly limited in type, but may include at least one selected from the group consisting of aluminum, stainless steel, copper, titanium, and alloys thereof, and preferably, may include aluminum.

The barrier layer may have an appropriate thickness within a range, in which a sufficient formability may be secured while effectively blocking penetration of the gas and/or moisture described above. By way of example, a thickness of the barrier layer may be 20 µm or more, 30 µm or more, 40 µm or more, 50 µm or more, 55 µm or more, or 60 µm or more, and 150 µm or less, 140 µm or less, 130 µm or less, 125 µm or less, 120 µm or less, 110 µm or less, 100 µm or less, or 90 µm or less.

The sealant layer may be an innermost layer of the pouch film. That is, the sealant layer may directly contact a battery body part (e.g., an electrode, a separator, and/or an electrolyte). Accordingly, the sealant layer should have excellent electrolyte resistance and excellent insulation properties. A thickness of the sealant layer may be, for example, 20 µm or more, 30 µm or more, 40 µm or more, or 50 µm or more, and 80 µm or less, 70 µm or less, or 60 µm or less, and when the above-described numerical range is satisfied, excellent electrolyte resistance and insulation properties may be achieved.

According to an embodiment, a pouch film, in which when sealed at a temperature of 165 °C or higher and 185 °C or lower for 2 seconds or more and 4 seconds or less under a pressure of 0.1 MPa or higher and 0.3 MPa or lower to form a pouch exterior material, an insulation resistance according to a measuring method below is 50 GΩ or more, is provided:

### [Measuring Method]

A pouch film specimen was molded into a size of 30 mm × 40 mm × 5 mm, 2 mL of an electrolyte was injected, and a lead tab was inserted to prepare a dummy cell through side sealing and tab sealing. Thereafter, the dummy cell was left for 24 hours, and a resistance was measured when a voltage of 1,000 V was applied.

The pouch film of the present disclosure has a specific melting temperature and, at the same time, when the pouch film satisfies Condition 1 and is sealed under the sealing conditions to form a pouch exterior material, the pouch exterior material may exhibit significantly excellent insulation resistance characteristics. By way of example, among the sealing conditions, a sealing temperature condition may be 165 °C or higher, 170 °C or higher, 175 °C or higher, 185 °C or lower, or 180 °C or lower, and a sealing time condition may be 2.1 seconds or less, 2.0 seconds or less, 1.9 seconds or less, or 1.8 seconds or less. Furthermore, the sealing pressure may be 0.1 MPa or higher or 0.2 MPa or higher, and may also be 0.3 MPa or lower or 0.2 MPa or lower. By way of example, as the melting temperature Tm of the sealant layer increases and as the Area A ratio increases, excellent insulation resistance characteristics and a sealing shape may be formed when sealing is performed under a higher sealing temperature condition. When the sealing temperature, time, and pressure are adjusted in this manner, a complete sealing shape may be achieved during thermal fusion between the sealant layers in the pouch film of the present disclosure, and a pouch exterior material having excellent insulation resistance, heat-sealing strength, and a bending property may be obtained therefrom.

### Pouch Exterior Material

The present disclosure provides a pouch exterior material including the pouch film according to the present disclosure described above.

Furthermore, according to an embodiment of the present disclosure, the present disclosure provides a pouch exterior material that is formed by sealing at a temperature of 165 °C or higher and 185 °C or lower for 2 seconds or more and 4 seconds or less under a pressure of 0.1 MPa or higher and 0.3 MPa or lower. By way of example, among the sealing conditions, a sealing temperature condition may be 165 °C or higher, 170 °C or higher, 175 °C or higher, 185 °C or lower, or 180 °C or lower, and a sealing time condition may be 2.1 seconds or less, 2.0 seconds or less, 1.9 seconds or less, or 1.8 seconds or less. Furthermore, the sealing pressure may be 0.1 MPa or higher or 0.2 MPa or higher, and may also be 0.3 MPa or lower or 0.2 MPa or lower.

### Secondary Battery

The present disclosure provides a secondary battery including the pouch exterior material according to the present disclosure described above.

The secondary battery of the present disclosure includes the battery body part and a pouch exterior material including the pouch film, and the battery body part is sealed by the pouch exterior material. By way of example, the secondary battery may be a lithium secondary battery, and in this case, the battery body part may include a cathode for a lithium secondary battery, an anode for a lithium secondary battery, and an electrolyte.

The cathode for a lithium secondary battery may be used without limitation as long as it is commonly used as a cathode of a lithium secondary battery. For example, the cathode for a lithium secondary battery may include a cathode active material, such as LiCoO₂, LiMnO₂, LiFeO₂, Li(NiₓMn_{γ}Co*z*)O₂ (X+Y+Z=1), or LiNiCoAlO₂.

The electrolyte may include a lithium salt and a non-aqueous organic solvent. Here, the lithium salt and the non-aqueous organic solvent may be used without limitation as long as they are commonly used as a lithium salt and an organic solvent, respectively, for an electrolyte of a lithium secondary battery.

The anode for a lithium secondary battery may be used without limitation as long as it is commonly used as an anode of a lithium secondary battery. For example, the anode for a lithium secondary battery may include an anode active material, such as a carbon-based active material or a silicon-based active material.

The pouch exterior material may have excellent heat-sealing strength characteristics. Accordingly, a problem in which the battery body part sealed by the pouch exterior material is exposed to an external environment may not occur.

Hereinafter, embodiments of the present disclosure will be described in detail so that a person having an ordinary skill in the art, to which the present disclosure pertains, may easily practice the present disclosure. However, the disclosure may be embodied in many different forms and should not be construed as limited to the embodiments set forth herein.

### Examples and Comparative Examples

### Example 1

As a pouch film in which an outer layer, a barrier layer, and a sealant layer were laminated, a laminated film including an outermost polyethylene terephthalate (PET) film having a thickness of 12 µm and a nylon (Ny) film having a thickness of 25 µm disposed inward thereof was used as the outer layer, aluminum having a thickness of 60 µm was used as the barrier layer, and the pouch film was manufactured such that the sealant layer having a thickness of 80 µm included a polypropylene extrusion lamination coating (EC) layer having a thickness of 30 µm and an unstretched polypropylene film (CPP) having a thickness of 50 µm by using an extrusion lamination method, wherein the extrusion lamination coating (EC) layer included a random polypropylene copolymer (random-PP), the unstretched polypropylene film (CPP) included a random polypropylene copolymer (random-PP), and the sealant layer included an ethylene-propylene copolymer (EPR)-based elastomer resin in an amount of 10 wt% to 20 wt%, thereby manufacturing pouch films having the melting temperatures and Area A ratios shown in Table 1 below. In this case, the melting temperature was measured for the sealant layer of the manufactured pouch film by using differential scanning calorimetry, and the Area A ratio was calculated as a ratio of an area below a reference point of 140 °C (Area A) to a sum of the area below the reference point of 140 °C (Area A) and an area above the reference point of 140 °C (Area B), i.e., Area A/(Area A + Area B), in a graph obtained through the differential scanning calorimetry. Thereafter, the manufactured pouch film was subjected to a sealing process under a pressure of 0.2 MPa for 3 seconds and under each temperature condition listed in Table 1 to manufacture a pouch exterior material, and then a sealing shape evaluation, an insulation property evaluation, and a bending property evaluation were performed according to the following Experimental Examples.

### Example 2

As a pouch film in which an outer layer, a barrier layer, and a sealant layer were laminated, a laminated film including an outermost polyethylene terephthalate (PET) film having a thickness of 12 µm and a nylon (Ny) film having a thickness of 25 µm disposed inward thereof was used as the outer layer, aluminum having a thickness of 60 µm was used as the barrier layer, and the sealant layer having a thickness of 80 µm was manufactured such that an extrusion lamination coating (EC) layer was formed through a co-extrusion method, wherein the extrusion lamination coating (EC) layer included a first extrusion lamination coating layer in contact with the barrier layer and a second extrusion lamination coating layer located on a lower surface of the first extrusion lamination coating layer, the first extrusion lamination coating layer included a block polypropylene copolymer (block-PP), the second extrusion lamination coating layer included a random polypropylene copolymer (random-PP), and the sealant layer included an ethylene-propylene copolymer (EPR)-based elastomer resin in an amount of 30 wt% to 40 wt%, thereby manufacturing pouch films having the melting temperatures and Area A ratios shown in Table 1 below. In this case, the melting temperature was measured for the sealant layer of the manufactured pouch film by using differential scanning calorimetry, and the Area A ratio was calculated as a ratio of an area below a reference point of 140 °C (Area A) to a sum of the area below the reference point of 140 °C (Area A) and an area above the reference point of 140 °C (Area B), i.e., Area A/(Area A + Area B), in a graph obtained through the differential scanning calorimetry. Thereafter, the manufactured pouch film was subjected to a sealing process under a pressure of 0.2 MPa for 3 seconds and under each temperature condition listed in Table 1 to manufacture a pouch exterior material, and then a sealing shape evaluation, an insulation property evaluation, and a bending property evaluation were performed according to the following Experimental Examples.

### Example 3

Except that the extrusion lamination coating (EC) layer included a random polypropylene copolymer (Random-PP), the unstretched polypropylene film (CPP) included a random polypropylene copolymer (Random-PP), and the sealant layer included an ethylene-propylene copolymer (EPR)-based elastomer resin in an amount of 20 wt% to 30 wt% in Example 1, pouch films and pouch exterior materials having the melting temperatures and Area A ratios shown in Table 1 below were manufactured in the same manner as in Example 1, and then a sealing shape evaluation, an insulation property evaluation, and a bending property evaluation were performed according to the following Experimental Examples.

### Example 4

Except that the extrusion lamination coating (EC) layer included a random polypropylene copolymer (random-PP), the unstretched polypropylene film (CPP) included a random polypropylene copolymer (random-PP), and the sealant layer included an ethylene-propylene copolymer (EPR)-based elastomer resin in an amount of 30 wt% to 40 wt% in Example 1, pouch films and pouch exterior materials having the melting temperatures and Area A ratios shown in Table 1 below were manufactured in the same manner as in Example 1, and then a sealing shape evaluation, an insulation property evaluation, and a bending property evaluation were performed according to the following Experimental Examples.

### Example 5

Except that the first extrusion lamination coating layer included a block polypropylene copolymer (block-PP), the second extrusion lamination coating layer included a random polypropylene copolymer (random-PP), and the sealant layer included an ethylene-propylene copolymer (EPR)-based elastomer resin in an amount of 40 wt% to 50 wt% in Example 2, pouch films and pouch exterior materials having the melting temperatures and Area A ratios shown in Table 1 below were manufactured in the same manner as in Example 1, and then a sealing shape evaluation, an insulation property evaluation, and a bending property evaluation were performed according to the following Experimental Examples.

### Comparative Example 1

Except that the extrusion lamination coating (EC) layer included a random polypropylene copolymer (random-PP), the unstretched polypropylene film (CPP) included a block polypropylene copolymer (block-PP), and the sealant layer included an ethylene-propylene copolymer (EPR)-based elastomer resin in an amount of 5 wt% or more and less than 10 wt% in Example 1, pouch films and pouch exterior materials having the melting temperatures and Area A ratios shown in Table 1 below were manufactured in the same manner as in Example 1, and then a sealing shape evaluation, an insulation property evaluation, and a bending property evaluation were performed according to the following Experimental Examples.

### Comparative Example 2

Except that the extrusion lamination coating (EC) layer included a block polypropylene copolymer (block-PP), the unstretched polypropylene film (CPP) included a random polypropylene copolymer (random-PP), and the sealant layer included an ethylene-propylene copolymer (EPR)-based elastomer resin in an amount of more than 50 wt% in Example 1, pouch films and pouch exterior materials having the melting temperatures and Area A ratios shown in Table 1 below were manufactured in the same manner as in Example 1, and then a sealing shape evaluation, an insulation property evaluation, and a bending property evaluation were performed according to the following Experimental Examples.

### Comparative Example 3

Except that the extrusion lamination coating (EC) layer included a random polypropylene copolymer (random-PP), the unstretched polypropylene film (CPP) included a polypropylene terpolymer (Ter-PP), and the sealant layer included an ethylene-propylene copolymer (EPR)-based elastomer resin in an amount of more than 40 wt% and 50 wt% or less in Example 1, pouch films and pouch exterior materials having the melting temperatures and Area A ratios shown in Table 1 below were manufactured in the same manner as in Example 1, and then a sealing shape evaluation, an insulation property evaluation, and a bending property evaluation were performed according to the following Experimental Examples.

### Experimental Example 1 - Evaluation of Sealing Shape

Samples were prepared by heat-sealing under the same conditions of a time of 3 seconds and a pressure of 0.2 MPa and then cutting to a width of 5 mm according to each temperature condition shown in Table 1. Thereafter, a shape of the sealant layer was observed through epoxy molding such that a cross-section of the sealing part was visible by using an optical device (an optical microscope DM2700M manufactured by Leica Microsystems).

OK: The shape of a peripheral portion of a heat-sealed area is in the form of a smooth and gentle curve.

NG: A boundary line is visible between the sealant layers, or the shape of a peripheral portion of a heat-sealed area is not in the form of a smooth and gentle curve but includes an angular or pointed projection shape.

### Experimental Example 2 - Evaluation of Insulation Property

The manufactured pouch film specimen was molded into a size of 30 mm × 40 mm × 5 mm, 2 mL of an electrolyte was injected, and a lead tab was inserted to prepare a dummy cell through side sealing and tab sealing. Thereafter, the dummy cell was left for 24 hours, and a resistance was measured when a voltage of 1,000 V was applied.
A: 100 GΩ or more
B: 50 GΩ or more and less than 100 GΩ
C: 25 GΩ or more and less than 50 GΩ
D: 10 GΩ or more and less than 25 GΩ
E: less than 10 GΩ

### Experimental Example 3 - Evaluation of Bending Property

A specimen prepared in the same manner as the specimen of Experimental Example 2 was prepared. After the specimen was left at room temperature for 24 hours, a voltage of 500 V was applied to select a specimen having an insulation property of 1 GΩ or more. One surface without a lead tab among the heat-sealed surfaces was repeatedly folded and unfolded, and a number of times the surface was repeatedly bent until the insulation property became 1 GΩ or less was measured.
A: 50 times or more
B: 30 times or more and less than 50 times
C: 10 times or more and less than 30 times
D: 5 times or more and less than 10 times
E: less than 5 times

**[Table 1]**

| Classificati on | PP Main Peak (Tm) | Area A / Area A+Area B | Sealing Temperature: 165 °C | | | Sealing Temperature: 175 °C | | | Sealing Temperature: 185 °C | | |
|---|---|---|---|---|---|---|---|---|---|---|---|
| | | | Sealin g Shape | Insula tion Proper ty | Bendi ng Proper ty | Sealin g Shape | Insula tion Proper ty | Bendi ng Proper ty | Sealin g Shape | Insula tion Proper ty | Bendi ng Prope rty |
| Example 1 (EC) | 145 | 40 to 50% | OK | B | A | OK | B | A | OK | B | A |
| Example 2 (Co-E) | 142 | 50 to 60% | OK | B | A | OK | B | A | OK | B | A |
| Example 3 (EC) | 142 | 60 to 70% | OK | B | A | OK | B | A | OK | B | A |
| Example 4 (EC) | 135 | 70% or more | OK | B | A | OK | B | A | OK | B | A |
| Example 5 (Co-E) | 159 | 50 to 60% | OK | B | E | OK | A | B | OK | A | B |
| Comparativ e Example 1 (EC) | 160 | less than 40% | NG | B | E | NG | B | D | OK | A | D |
| Comparativ e Example 2 (EC) | 162 | 40 to 50% | NG | B | E | OK | A | C | OK | A | C |
| Comparativ e Example 3 (EC) | 130 | 85% or more | OK | C | B | OK | D | B | OK | D | B |

Referring to Table 1, it may be identified that, in the cases of Example 1 to 5, which satisfy the melting temperature range of the present disclosure and simultaneously satisfy the Area A ratio as defined in Condition 1, the sealing shape exhibits a complete sealing shape and excellent insulation property and bending property. Referring to FIG. 1, the complete sealing shape refers to a case in which, as shown in the OK image, the shape of a peripheral portion of a heat-sealed area formed by contact between the sealant layers is in the form of a smooth and gentle curve.

On the other hand, it may be identified that, in the cases of Comparative Examples 1 to 3, which do not satisfy at least one of the melting temperature range and the Area A ratio, the sealing shape, insulation property, and bending property are at inferior levels. In particular, in Comparative Example 1, in which the Area A ratio is less than 40%, it may be confirmed that the sealing shape exhibits an incomplete form, and referring to FIG. 1, the shape of a peripheral portion of a heat-sealed area includes an angular or pointed projection shape rather than being in the form of a smooth and gentle curve, as shown in the NG image. Furthermore, in the case of Comparative Example 2, which does not satisfy the melting temperature range, it may be identified that the bending property is at a significantly inferior level. Furthermore, as in Comparative Example 3, when Area A ratio exceeds an upper limit of the range, the sealing shape may exhibit a complete form, but it may be identified that the insulation property is at a significantly inferior level.

### Acknowledgement

The present disclosure is a result achieved through support of the following project.
[Project Identification Number] 1415185612
[Project Number] 20022450
[Ministry] Ministry of Trade, Industry and Energy
[Project management (professional) institution] Korea Planning & Evaluation Institute of Industrial Technology (KEIT)
[Research business] Development of material and part technology (Top company)
[Research project] Development of next-generation secondary battery pouch that may implement twice or more high adhesive strength (60°C)
[Contribution rate] 1/1
[Project implementation organization] Youlchon Chemical Co., Ltd
[Research Period] 2023.01.01 to 2023.12.31

## Claims

1. A pouch film comprising:
an outer layer, a barrier layer, and a sealant layer laminated sequentially,
wherein the sealant layer includes a polyolefin-based resin and a polyolefin-based elastomer,
wherein the sealant layer has a melting temperature (Tm) of 130 °C or higher and 160 °C or lower as measured by differential scanning calorimetry (DSC) at a heating rate of 10 °C/min, and
wherein the pouch film satisfies Condition 1 below:
[Condition 1]
a ratio of an area below a reference point of 140 °C (Area A) to a sum of the area below the reference point of 140 °C (Area A) and an area above the reference point of 140 °C (Area B), i.e., Area A/(Area A + Area B), in a graph obtained by the differential scanning calorimetry, is 40% or more and less than 85%.

2. The pouch film of claim 1, wherein the polyolefin-based resin includes at least one material selected from the group consisting of homo-polypropylene (homo-PP), a random polypropylene copolymer (random-PP), and a block polypropylene copolymer (block-PP).

3. The pouch film of claim 1, wherein a content of the polyolefin-based elastomer is 10 wt% or more and 50 wt% or less based on a total resin of the sealant layer.

4. The pouch film of claim 1, wherein the polyolefin-based elastomer includes at least one material selected from the group consisting of an ethylene-propylene copolymer (EPR)-based elastomer resin, an ethylene-butene copolymer (EBR)-based elastomer resin, an ethylene-hexene copolymer (EHR)-based elastomer resin, an ethylene-octene copolymer (EOR)-based elastomer resin, a propylene-butene copolymer (PBR)-based elastomer resin, a propylene-hexene copolymer (PHR)-based elastomer resin, a propylene-octene copolymer (POR)-based elastomer resin, an LLDPE-based elastomer resin, and a thermoplastic polyurethane (TPU) elastomer resin.

5. The pouch film of claim 1, wherein the ratio of Area A/(Area A + Area B) in Condition 1 is 50% or more and 80% or less.

6. The pouch film of claim 1, wherein the sealant layer has a melting temperature (Tm) of 130 °C or higher and 150 °C or lower as measured by differential scanning calorimetry at a heating rate of 10 °C/min.

7. The pouch film of claim 1, wherein the outer layer includes at least one material selected from the group consisting of nylon and polyethylene terephthalate.

8. The pouch film of claim 1, wherein the barrier layer includes at least one selected from the group consisting of aluminum, stainless steel, copper, titanium, and alloys thereof.

9. The pouch film of claim 1, wherein when sealed at a temperature of 165 °C or higher and 185 °C or lower for 2 seconds or more and 4 seconds or less under a pressure of 0.1 MPa or higher and 0.3 MPa or lower to form a pouch exterior material, an insulation resistance according to a measuring method below is 50 GΩ or more:
[Measuring method]
A pouch film specimen was molded into a size of 30 mm × 40 mm × 5 mm, 2 mL of an electrolyte was injected, and a lead tab was inserted to prepare a dummy cell through side sealing and tab sealing. Thereafter, the dummy cell was left for 24 hours, and a resistance was measured when a voltage of 1,000 V was applied.

10. A pouch exterior material comprising the pouch film of claim 1.

11. The pouch exterior material of claim 10, wherein the pouch exterior material is formed by sealing at a temperature of 165 °C or higher and 185 °C or lower for 2 seconds or more and 4 seconds or less under a pressure of 0.1 MPa or higher and 0.3 MPa or lower.

12. A secondary battery comprising the pouch exterior material of claim 10.
